# EUROPEAN PATENT SPECIFICATION

(11) **EP 3 064 769 B1**
(45) Date of publication and mention of the grant of the patent: **21.08.2019**
(21) Application number: 14857250.6
(22) Date of filing: 13.10.2014
(51) Int. Cl.: F03D 3/00, F03D 3/06, F03D 3/04

(54) **IMPROVED WIND TURBINE FOR PRODUCTION OF ELECTRICAL POWER WITH MULTIPLE-BLADE VANES AND HORIZONTAL SHAFT SUPPORTED AT THE ENDS**
VERBESSERTE WINDTURBINE ZUR ERZEUGUNG VON ELEKTRISCHER ENERGIE MIT MEHREREN SCHAUFELN UND HORIZONTALER WELLE AN DEN ENDEN
AÉROGÉNÉRATEUR PERFECTIONNÉ POUR LA PRODUCTION D'ÉNERGIE ÉLECTRIQUE AVEC PLUSIEURS PALES D'AUBES ET UN ARBRE HORIZONTAL S'APPUYANT SUR LES EXTRÉMITÉS

(30) Priority: 30.10.2013 ES 201300927 U
(43) Date of publication of application: 07.09.2016
(73) Proprietor: Morcillo Molina, Ricardo, 30530 Cieza (Murcia) (ES)
(72) Inventor: Morcillo Molina, Ricardo, 30530 Cieza (Murcia) (ES)
(86) International application number: PCT/ES2014/070774
(87) International publication number: WO 2015/063354

(56) References cited:
- WO-A1-2012/172443
- CN-U- 202 900 534
- GB-A- 110 850
- GB-A- 2 264 754
- GB-A- 2 444 334
- GB-A- 2 444 334
- IT-A1- MC20 120 074
- US-A- 2 409 439
- US-A1- 2013 033 043

## Description

### OBJECT OF THE INVENTION

Wind turbine for production of electric power with horizontal shaft and multiple-blade vanes with individually adjustable rotation of the blades.

### Technical Field

The invention fits in the technical sector of processes to produce electric energy from wind turbines.

### Background of the invention

In the prior art, there are different models of wind turbines that, generally, require an energy input other than wind energy to start its rotation. On the other hand, those wind turbines are installed as single units (on towers, for example) so that each unit occupies a large floor area and, since it is not possible to attach several individual units, the occupation of land by large power generation facilities is very high.

It would be desirable to have wind turbines generating electrical power without energy contribution other than wind energy to start its rotation, said wind turbines being safe and stable enough to be able to be attached one to each other, thus taking full advantage of the available floor surface and obtaining a better use of natural resources.

Spanish patent ES 2387373 from the same inventor provides a wind turbine that tries to overcome the above drawbacks. However, the shape and attachment of the blades and the configuration of the support in which said blades are housed and the axis common to them have features that involve a deficiency in performance which can be subject to improvement. Other examples of horizontal wind turbines are provided by GB 2 444 334 A, CN 202900534 U and GB 110 850 A.

The present invention provides a wind turbine that overcomes the aforesaid drawbacks.

### Brief Summary of the Invention

The wind turbine of the invention essentially comprises several vanes constituted by a plurality of blades, each blade being attached by one end to a horizontal axis or shaft of rotation of the wind turbine, being the ends of said horizontal shaft supported on a hollow frustum of pyramid or other suitable structural configuration with all its lateral sides closed. The blades are arranged in generally symmetrical planes (blades planes) relative to the axis of rotation of the wind turbine, such that each plane has several blades parallel to each other and each of said blades is individually adjustable by rotation about an axis of blade that is perpendicular to the horizontal shaft of rotation of the wind turbine. The number, length and dimensions both of the vanes and of their blades depend on the power that is sought.

The horizontal shaft of rotation of the wind turbine is supported at its ends on two lateral sides of the closed four-sided frustum of pyramid by means of two structural elements. The mechanic elements (transmissions, multipliers, brake system), necessary for the power production, and for control and operation of the wind turbine, are housed in one of the structural elements. A structure made of metallic pillars and beams supported on a reinforced concrete foundation can be built to provide stability to the hollow frustum of pyramid.

The blades of the vanes may be braced to ensure, where necessary, the uniform movement of all of them.

Another possible configuration, if the conditions of the site require so, is that the blades be completely fixed, in order to abolish the movement of rotation of the axes of the blades.

To maximize the effect of wind impinging directly on the blades and prevent loss of power that could mean wind exposure of the blades located below the horizontal shaft of rotation of the turbine, the truncated pyramidal housing is closed on all lateral sides. Therefore, the truncated pyramid entirely covers the blades of the wind turbine from the horizontal shaft of the wind turbine downwards, that is, covers the blades that are in the lower half of the turbine, so that when the wind impinges on the blades shown in the upper half of the wind turbine, the wind turbine begin to rotate about its horizontal shaft, since this wind force is not compensated by the bottom part of the wind turbine. Accordingly, the present invention provides a wind turbine that does not require electric power to start its turning movement.

In this way, the blades attached to the horizontal shaft of the wind turbine will keep their rotation around the wind turbine shaft until the wind force stops or until it is decided to stop the rotation. The wind turbine can be stopped by either using a mechanical brake implemented in the mechanism of rotation or causing the individual blades rotate 90 degrees around their longitudinal axes with respect to the direction of the wind, offering in this way a minimum surface against the wind force and thereby reducing the rotational speed. The rotational speed can be controlled according to the angle of the blades. The angle of the blades combined with the mechanical braking system can contribute to the complete stop of the wind turbine.

To enable individual rotation of the blades, they have a double gear located in their union to the horizontal shaft of the wind turbine.

The horizontal shaft of the wind turbine may be of circular or prismatic cross-section with a number of faces each suitable to allow different number of blades according to power requirements and wind exposure parameters.

The wind turbine of the invention, due to its security and stability allows for attaching several wind turbines in the direction of the wind without reducing its performance and without a need to keep a safe distance between each other. Thus, several wind turbines for production of electric energy of the invention may be installed in a small space, thereby improving the efficiency of the land and natural resources.

### Brief Description of Drawings

In that follows and by way of non-limiting example, a preferred embodiment of the invention will be described for a better understanding of the wind turbine for production of electric power with individually-adjustable rotating blades, with a horizontal shaft of the wind turbine supported at its ends on structural elements of a laterally-closed truncated pyramid housing.
Figure 1 shows a schematic view of the wind turbine of the invention showing several blades (3) arranged in a wind turbine vane (4) and attached to the horizontal shaft (5) of the wind turbine that is supported at its ends on structural elements (2) located on two opposed sides of the truncated pyramidal housing (1).
Figures 2.1 and 2.2 show simplified versions of the wind turbine of Figure 1 showing two possible embodiments. Figure 2.1 shows a model with four long-narrowed blades (3) for each vane (4); figure 2.2 shows the same wind turbine with three shorter and wider blades (3). In both cases, the rest of elements, which may be the same for both embodiments, are: hollow truncated pyramid housing (1), rotation mechanism (6), structural elements of support (2), and horizontal shaft (5) of the wind turbine.
Figure 3 shows a detail of the horizontal shaft (5) of the wind turbine, made of prismatic hexagonal cross-section, and the double gear assembly (6, 7) allowing the rotation of each blade.

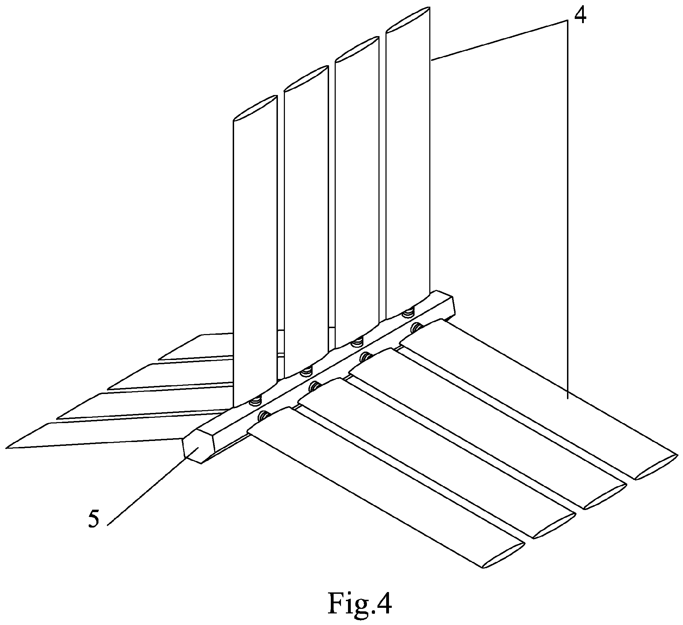

Figure 4 shows an arrangement for the horizontal shaft of the wind turbine (5) consisting of three vanes (4), each one with four blades (3), attached to three faces of the prismatic hexagonal shaft (5).

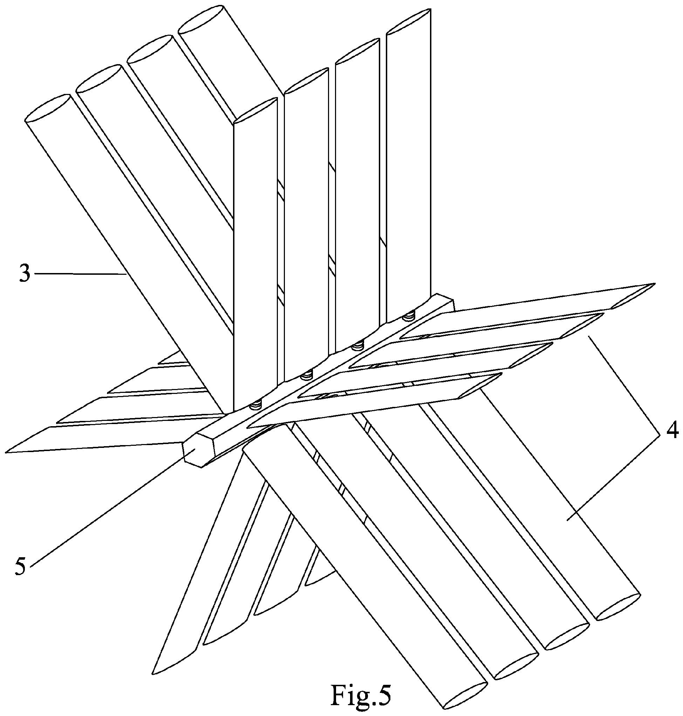

The Figure 5 shows another arrangement for the horizontal shaft of the wind turbine (5), formed by six vanes (4), each one with four blades (3), attached to six faces of the hexagonal shaft (5).

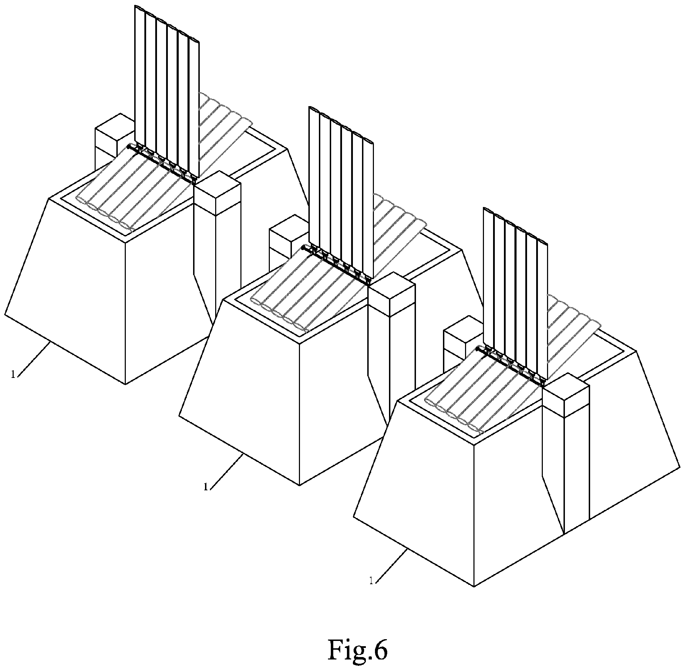

Figure 6 shows schematically an arrangement of three wind turbines (1) attached to one another.

### Description of a preferential embodiment of the invention

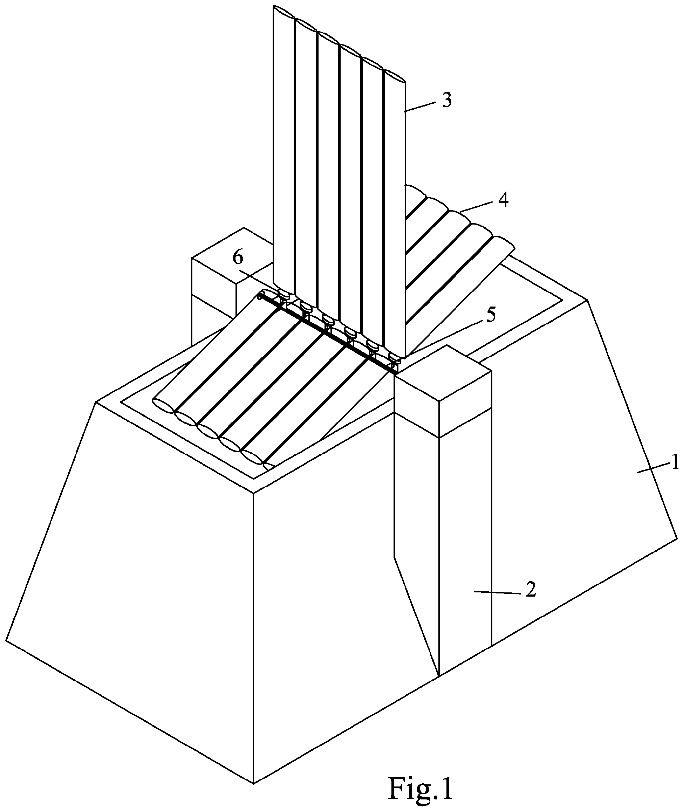

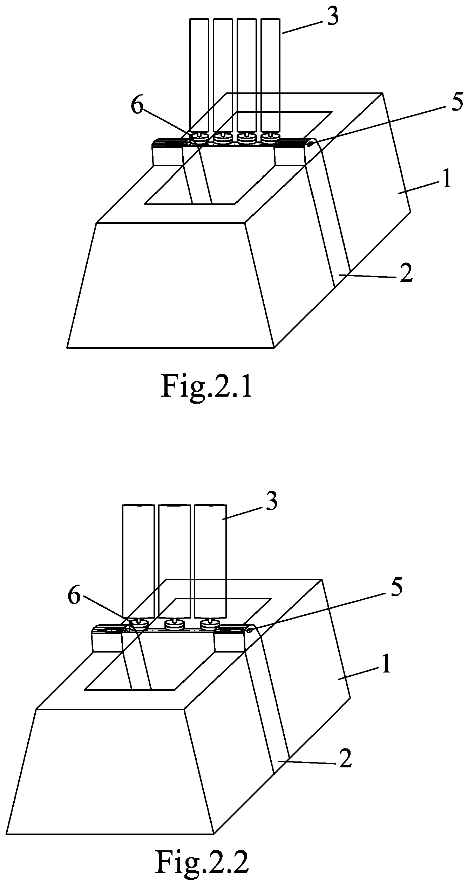

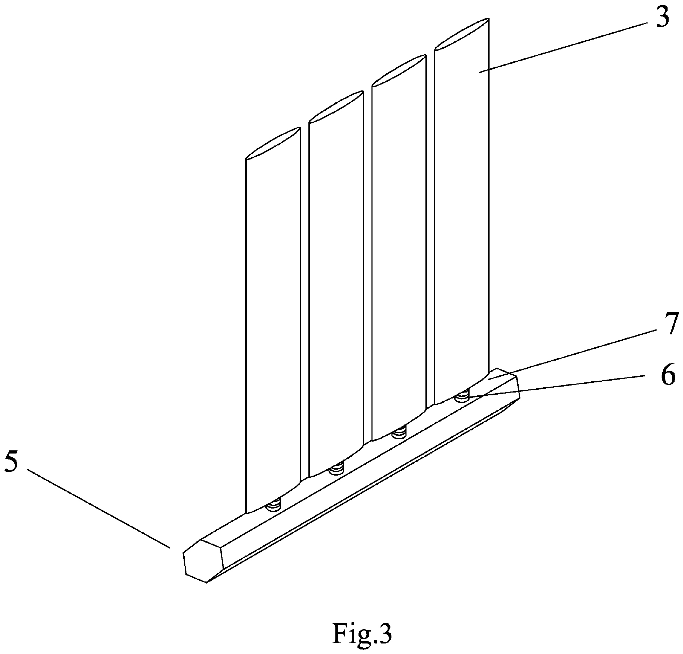

In a preferential embodiment of the invention shown in Figs. 1, 2.1 and 3, the wind turbine comprises four vanes (4), each one consisting of four blades (3) parallel to each other which are attached by one end to a horizontal shaft of rotation (5) of the wind turbine, the ends of said horizontal shaft (5) being supported on two opposite sides of a truncated pyramidal housing (1) closed on all its lateral sides. The blades (3) are arranged on planes of vanes (4) which are generally symmetrical with respect to the horizontal shaft of rotation (5) of the wind turbine, in a way that each vane (4) comprises several blades (3) parallel to each other and each of said blades (3) is individually adjustable by rotation around its longitudinal axis by means of a double gear assembly (6, 7). The longitudinal axes of the blades are perpendicular to the horizontal shaft (5) of the wind turbine. The length, size and number of vanes (4) and their blades (3) depend on the power that is intended to obtain.

The horizontal shaft of rotation (5) of the wind turbine is supported at its ends on two lateral sides of the closed four-sided truncated pyramidal housing (1), via two structural elements (2), preferably located at the midpoint of said two sides. Housed in one of the structural elements (2), mechanical means (transmissions, multipliers, brake system) required for energy production and the control and operation of the wind turbine are arranged. A structure with metal pillars and beams may be built to give stability to the truncated pyramidal housing (1), placed on a reinforced concrete foundation.

The truncated pyramidal housing (1) covers the blades (3) from the horizontal shaft of the wind turbine downwards, that is, covers the blades that are in the lower half of the wind turbine, i.e. within the cavity of the housing (1). In this way, when the wind force impinges on the blades (3) which are in the upper half of the wind turbine, the wind turbine begin to rotate around its horizontal shaft, since this wind force is not compensated by the bottom part of the wind turbine. In this way, the blades (3) attached to the horizontal shaft (5) of the wind turbine will keep rotating until the force wind stops, or until it is decided to stop the rotation. The wind turbine can be stopped by either using a mechanical brake implemented in the mechanism of rotation or rotating the individual blades (3) 90 degrees with respect to the direction of the wind, offering in this way a minimum surface against the wind force and thereby reducing the rotation speed of the wind turbine. The rotational speed can be controlled according to the angle of the blades. The angle of the blades, combined with the function of the mechanical braking system, contribute to the complete stop of the wind turbine.

To enable individual rotation of the blades, they have a double gear assembly (6, 7) located in the union of the blades to the horizontal shaft (5) of the wind turbine.

The horizontal shaft (5) of the wind turbine may be of circular or prismatic cross-section with a number of faces suitable to allow different combinations of blades (3) according to power requirements and wind exposure parameters.

A structure with metal pillars and beams may be built to give stability to the truncated pyramidal housing (1), placed on a reinforced concrete foundation.

The wind turbine of the invention, due to its security and stability allows for attaching several wind turbines to one another in the direction of the wind without reducing its performance and without a need to keep a safe distance between each other. Thus, several wind turbines for production of electric energy of the invention may be installed in a small space, thereby improving the efficiency of the land and natural resources.

Once the invention as well as a preferential embodiment of same have been described, it must only be noted that modifications of the indicated features are possible without departing from the scope of the invention that is defined by the following claims.

## Claims

1. A wind turbine for electric power production comprising:
- a hollow truncated pyramidal housing (1) closed on all lateral sides;
- a plurality of vanes (4), each one consisting of several blades (3) parallel to each other, said blades being attached by one end to a horizontal shaft of rotation (5) of the wind turbine, and each of said blades being individually rotatable around a longitudinal axis of the blade that is perpendicular to the horizontal shaft (5) of the wind turbine, said truncated pyramidal housing (1) lateral sides covering said blades (3) from said horizontal shaft (5) downwards;

2. The wind turbine of claim 1, wherein the rotation of each of the blades (3) around a longitudinal axis of each blade (3) can be up to 90 °.

## Patentansprüche

1. Windenergieanlage zur Stromerzeugung, umfassend:
- ein hohles, pyramidenstumpfförmiges Gehäuse (1), das nach allen Seiten geschlossen ist;
- eine Vielzahl von Leitschaufeln (4), von denen jede aus mehreren parallel zueinander angeordneten Schaufeln (3) besteht, wobei die Schaufeln an einem Ende an einer horizontalen Drehwelle (5) der Windenergieanlage angebracht sind und jede der Schaufeln ist einzeln um eine Längsachse der Schaufel drehbar, die senkrecht zur horizontalen Welle (5) der Windkraftanlage ist, wobei die seitlichen Seiten des pyramidenstumpfförmigen Gehäuses (1) die Schaufeln (3) von der horizontalen Welle (5) nach unten abdecken.

2. Windenergieanlage nach Anspruch 1, wobei die Drehung jeder der Schaufeln (3) um eine Längsachse jeder Schaufel (3) bis zu 90 ° betragen kann.

## Revendications

1. Une éolienne pour la production d'énergie électrique comprenant:
- un logement pyramidal tronqué creux (1) fermé sur tous les côtés latéraux;
- une pluralité d'aubes (4) composées chacune de plusieurs pales (3) parallèles entre elles, lesdites pales étant fixées par une extrémité à un arbre de rotation horizontal (5) de l'éolienne, et chacune desdites pales étant pouvant tourner individuellement autour d'un axe longitudinal de la pale qui est perpendiculaire à l'arbre horizontal (5) de l'éolienne, lesdits côtés latéraux de logement pyramidal tronqué (1) recouvrant lesdites pales (3) depuis ledit arbre horizontal (5) vers le bas.

2. Eolienne selon la revendication 1, dans laquelle la rotation de chacune des pales (3) autour d'un axe longitudinal de chaque pale (3) peut aller jusqu'à 90 °.
